# EUROPÄISCHE PATENTSCHRIFT

(11) **EP 3 179 106 B1**
(45) Veröffentlichungstag und Bekanntmachung des Hinweises auf die Patenterteilung: **29.05.2019**
(21) Anmeldenummer: 16002579.7
(22) Anmeldetag: 05.12.2016
(51) Int. Cl.: F04C 2/10, F04C 15/00

(54) **ELEKTROMOTORISCH ANGETRIEBENE FLÜSSIGKEITSPUMPE**
ELECTRIC MOTOR DRIVEN LIQUID PUMP
POMPE À LIQUIDE ENTRAÎNÉE PAR UN MOTEUR ÉLECTRIQUE

(30) Priorität: 09.12.2015 DE 102015015863
(43) Veröffentlichungstag der Anmeldung: 14.06.2017
(73) Patentinhaber: FTE automotive GmbH, 96106 Ebern (DE)
(72) Erfinder: Reul, Alexander, D-96158 Frensdorf Reundorf (DE); Dirauf, Markus, D-96106 Ebern (DE)
(74) Vertreter: Oppermann, Mark

(56) Entgegenhaltungen:
- DE-A1-102008 034 176
- JP-A- 2013 183 603
- US-A1- 2004 136 847

## Beschreibung

### TECHNISCHES GEBIET

Die vorliegende Erfindung bezieht sich auf eine elektromotorisch angetriebene Flüssigkeitspumpe gemäß dem Oberbegriff des Patentanspruchs 1. Insbesondere bezieht sich die Erfindung auf solche Flüssigkeitspumpen, wie sie neuerdings überwiegend aus Kunststoffteilen gefertigt beispielsweise als Schmierölpumpe, Kühlölpumpe, Zusatzölpumpe oder Aktuatorpumpe massenweise in der Automobilindustrie zum Einsatz kommen sollen, um aufgrund ihres geringen Gewichts und ihrer bedarfsgerechten elektrischen Ansteuermöglichkeit zu einer Reduzierung des Kraftstoffverbrauchs und der CO₂-Emissionen beizutragen.

### STAND DER TECHNIK

Ein geringer Ausstoß von Schadstoffen sowie ein möglichst niedriger Kraftstoffverbrauch während des Betriebs eines Kraftfahrzeugs spielen bei der Entwicklung von neuen Fahrzeugen und Fahrzeugkonzepten inzwischen bekanntlich eine wesentliche Rolle; diese Aspekte werden künftig - auch aufgrund gesetzlicher Reglementierungen - sogar noch mehr im Fokus der Entwickler stehen. Unter dieser Zielsetzung können im Bereich des Antriebsstrangs eines Kraftfahrzeugs, insbesondere innerhalb des Getriebes als auch in dessem Umfeld, regelbare elektrische Ölpumpen vielfältig verwendet werden. So sind die Pumpen etwa in CVT- (Continuously Variable Transmission), IVT- (Infinitely Variable Transmission) und Doppelkupplungsgetrieben sowohl als Schmierölpumpe als auch als Kühlöl- oder Aktuierungspumpe einsetzbar, und zwar entsprechend bedarfsgerecht sowie leistungsoptimiert, weil sie drehzahl- und stromregelbar betrieben werden können. Anders als bei herkömmlichen Ölpumpen erfolgt der Antrieb der hier betrachteten Pumpen nicht durch mechanische Kopplung an beispielsweise eine Welle des Verbrennungsmotors oder des Getriebes, sondern mittels eines Elektromotors unter Zuhilfenahme elektrischer Energie aus dem Bordnetz bzw. der Batterie des Kraftfahrzeugs. Somit ist es möglich, in bestimmten Situationen, zum Beispiel auch bei stillstehendem Verbrennungsmotor in einem Start/Stop-Betrieb des Kraftfahrzeugs, Öl für Schmierungs- und/oder Kühlzwecke zu fördern.

Aus dem Einbauort der Pumpe im Kraftfahrzeug nahe dem Medium, welches gefördert werden muss (zum Beispiel im Ölsumpf), oder nahe der Stelle, wo das geförderte Medium zu Schmierungs- und/ oder Kühlzwecken benötigt wird, d.h. regelmäßig innerhalb oder zumindest in der Nähe des Getriebegehäuses, ergeben sich weitere Anforderungen an die Pumpe. Zum einen ist der zur Verfügung stehende Einbauraum innerhalb oder in der Nähe des Getriebegehäuses in der Regel sehr knapp bemessen, so dass die Pumpe einen möglichst kompakten Aufbau besitzen muss. Zum anderen ist eine zuverlässige Funktion der Pumpe über einen relativ großen Temperaturbereich zu gewährleisten, der sich z.B. von -40°C im Winterbetrieb bei kaltem Verbrennungsmotor bis +150°C im Sommerbetrieb bei warmgelaufenem Verbrennungsmotor erstrecken kann. Diese Anforderungen stehen zudem in einer konträren Beziehung zueinander: Je kompakter der Aufbau der Pumpe bei vorgegebener Pumpenleistung - beispielsweise Drücke bis zu 30 bar bzw. Volumenströme bis zu 25 L/min in Getriebeanwendungen - sein soll, desto schwieriger kann die zuverlässige Funktion der Pumpe über einen großen Temperaturbereich sichergestellt werden. Dabei kann sich im Niedrig-Temperaturbereich insbesondere die hohe Viskosität des Öls bei kleinen Strömungsquerschnitten als problematisch erweisen, während bei hohen Temperaturen vornehmlich eine ausreichende Wärmeabfuhr vom Elektromotor eine Herausforderung darstellt.

Eine axial kompakt bauende, elektromotorisch angetriebene Hydraulikpumpe mit einem Elektromotor und einer Fördereinrichtung in einem gemeinsamen Gehäuse ist beispielsweise aus der Druckschrift US 2004/0136847 A1 bekannt.

In diesem Zusammenhang offenbart die den Oberbegriff des Patentanspruchs 1 bildende Druckschrift JP 2013-183603 A (Fig. 1 bis 3(b)) eine elektromotorisch angetriebene Flüssigkeitspumpe, die ein Gehäuse mit einem Sauganschluss und einem Druckanschluss aufweist. In dem Gehäuse ist ein als Innenläufer ausgeführter Elektromotor integriert, der einen Stator und einen innerhalb des Stators unter Belassung eines Ringspalts aufgenommenen, um eine Drehachse drehend antreibbaren Rotor umfasst. Mit dem Rotor des Elektromotors ist eine Fördereinrichtung in Form einer G-Rotor- (Generated Rotor) Pumpeneinrichtung antriebsverbunden, die einen mit dem Sauganschluss fluidverbundenen Saugeingang und einen mit dem Druckanschluss fluidverbundenen Druckausgang aufweist. Zur Ansteuerung des Elektromotors ist ferner eine Leistungselektronik vorgesehen, die ebenfalls im Gehäuse angeordnet ist. Genauer gesagt besitzt das Gehäuse eine im Wesentlichen quer zur Drehachse verlaufende, dem Rotor benachbarte Zwischenwand, die einen gefluteten Motorinnenraum begrenzt und auf deren vom Rotor abgewandten, trockenen Seite die Leistungselektronik montiert ist.

Bei diesem Stand der Technik ist die Anordnung der Pumpenbestandteile schon so getroffen, dass die über den Sauganschluss des Gehäuses in die Flüssigkeitspumpe eintretende Flüssigkeit zunächst durch den Motorinnenraum hindurch muss bevor sie zum Saugeingang der Fördereinrichtung gelangt, womit eine Kühlung des Elektromotors im Bereich von Rotor und Stator bezweckt wird. Hierbei ist die ebenfalls Wärme erzeugende und abgebende Leistungselektronik so weit vom Motorinnenraum beabstandet - es verbleibt sogar Platz für eine der beiden stirnseitigen Rotorlagerungen in bzw. an der Zwischenwand des Gehäuses - dass eine stärkere Erwärmung des Motorinnenraums durch die Leistungselektronik kaum zu erwarten steht. Für eine ausreichende Abfuhr der von der Leistungselektronik erzeugten Wärme ist indes anderweitig Sorge zu tragen. Außerdem besteht bei dieser Konstruktion ein nicht unerheblicher axialer Bauraumbedarf, was die Einsatzmöglichkeiten einer solchen Pumpe beschränkt.

Eine weitere Hydraulikpumpe, bei der eine Fördereinrichtung für Flüssigkeit, ein Elektromotor zum Antrieb der Fördereinrichtung und eine Leistungselektronik zur Ansteuerung des Elektromotors in einem Gehäuse integriert sind, ist aus der Druckschrift DE 10 2008 034 176 A1 bekannt.

### AUFGABENSTELLUNG

Der Erfindung liegt die Aufgabe zugrunde, insbesondere für Getriebeanwendungen in Kraftfahrzeugen eine möglichst leicht und kompakt bauende, elektromotorisch angetriebene Flüssigkeitspumpe bereitzustellen, welche die obigen Nachteile vermeidet und eine gegenüber dem geschilderten Stand der Technik optimierte Kühlung besitzt.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 15.

Bei einer elektromotorisch angetriebenen Flüssigkeitspumpe, umfassend ein einen Sauganschluss und einen Druckanschluss aufweisendes Gehäuse zur Aufnahme eines Elektromotors, der einen Stator und einen innerhalb des Stators unter Belassung eines Ringspalts aufgenommenen, um eine Drehachse drehend antreibbaren Rotor hat, eine mit dem Rotor antriebsverbundene Fördereinrichtung, die einen mit dem Sauganschluss fluidverbundenen Saugeingang und einen mit dem Druckanschluss fluidverbundenen Druckausgang aufweist, und eine Leistungselektronik zur Ansteuerung des Elektromotors, wobei das Gehäuse eine im Wesentlichen quer zur Drehachse verlaufende, dem Rotor benachbarte Zwischenwand aufweist, auf deren vom Rotor abgewandten Seite die Leistungselektronik montiert ist; ist erfindungsgemäß der Saugeingang der Fördereinrichtung bezüglich der Drehachse auf einer radialen Höhe angeordnet, die kleiner als ein Innenradius des Ringspalts ist, während der Rotor wenigstens einen Durchgang besitzt, der auf einer bezüglich der Drehachse im Wesentlichen konstanten oder zum Saugeingang der Fördereinrichtung hin zunehmenden radialen Höhe verläuft, so dass eine über den Sauganschluss des Gehäuses von dem Saugeingang der Fördereinrichtung angesaugte Flüssigkeit teilweise über den Ringspalt zwischen Rotor und Stator zwangsgeführt ist und an der Zwischenwand des Gehäuses unter Kühlung derselben eine Umlenkung erfährt bevor sie durch den Durchgang des Rotors zum Saugeingang der Fördereinrichtung gelangt.

Zunächst wird bei der erfindungsgemäßen Flüssigkeitspumpe also vorteilhaft die Flüssigkeit auf der Saugseite der Fördereinrichtung zu Kühlungszwecken verwendet. Dies ist gegenüber ebenfalls vorbekannten Lösungen, bei denen ein Teil der geförderten Flüssigkeit auf der Druckseite der Fördereinrichtung zur Pumpenkühlung abgezweigt wird, effizienter. Denn erstens kann die von der Fördereinrichtung geförderte Flüssigkeit druckseitig vollständig über den Druckanschluss abgegeben werden, muss hier zu Kühlungszwecken also keine Aufteilung erfahren; und zweitens lässt sich die saugseitig der Fördereinrichtung über den Elektromotor und die Leistungselektronik "aufgewärmte" Flüssigkeit - z.B. Getriebeöl - leichter fördern, weil aufgrund der temperaturbedingten Viskositätsänderung die innere Reibung in der Flüssigkeit geringer ist.

Ferner wird bei der erfindungsgemäßen Flüssigkeitspumpe infolge der räumlichen Anordnung des Saugeingangs der Fördereinrichtung bezüglich des Ringspalts zwischen Rotor und Stator sowie des wenigstens einen Durchgangs im Rotor bezogen auf die Drehachse des Rotors im Bereich des Elektromotors eine Strömung mit vorbestimmter Richtung in dem Pumpengehäuse erzwungen. Über den Sauganschluss des Gehäuses in den Ringspalt zwischen Rotor und Stator gelangte Flüssigkeit wird nämlich in einer Zwangsströmung weiter durch den Ringspalt gezogen, an der Zwischenwand des Gehäuses umgelenkt und durch den wenigstens einen Durchgang im Rotor zum Saugeingang der Fördereinrichtung geleitet. Dabei wird nicht nur von den Statorwicklungen generierte Wärme über die durch den Ringspalt strömende, den Stator kühlende Flüssigkeit abgeführt, sondern auch von der Leistungselektronik erzeugte Wärme, die durch die Zwischenwand geleitet und von der angesaugten Flüssigkeit mit deren kühlendem Entlangstreichen an der Zwischenwand mitgenommen wird. Bei ihrem weiteren Weg zum Saugeingang der Fördereinrichtung über den wenigstens einen Durchgang im Rotor wird die Flüssigkeit durch die infolge der Rotation des Rotors bewirkten Zentrifugalkräfte jedenfalls nicht aufgehalten (Verlauf des Durchgangs auf im Wesentlichen konstanter radialer Höhe), ggf. sogar unterstützt ("ansteigender" Verlauf des Durchgangs zum Saugeingang der Fördereinrichtung hin).

Im Ergebnis erfolgt eine optimierte Kühlung der erfindungsgemäßen Flüssigkeitspumpe im Bereich des Elektromotors und der Leistungselektronik. Dies wiederum ermöglicht es gegenüber dem eingangs geschilderten Stand der Technik, den Elektromotor, namentlich dessen Stator, und die Leistungselektronik näher zusammenzubringen bzw. zusammenzurücken, was nicht nur einer besonders kompakten Ausgestaltung der Flüssigkeitspumpe förderlich ist, sondern auch zu einer Gewichtsersparnis aufgrund geringerer Gehäusemasse führt. Dieser kompakte, mit hoher Leistungsdichte ausgeführte Aufbau prädestiniert die erfindungsgemäße Flüssigkeitspumpe z.B. für den direkten Verbau als Ölpumpe innerhalb eines Getriebegehäuses, eine Montage außerhalb des Getriebegehäuses ist jedoch aufgrund des geringen Bauraumbedarfs in der Regel ebenfalls problemlos möglich.

In einer vorteilhaften Weiterbildung der Flüssigkeitspumpe, bei der der Stator des Elektromotors eine Mehrzahl von metallischen Statorblechen aufweist, die Statorwicklungen tragen und radial innere Enden besitzen, welche an dem Ringspalt angrenzen, können die Statorbleche und die Statorwicklungen mittels einer Kunststoffumspritzung derart miteinander verbunden sein, dass die radial inneren Enden der Statorbleche von der Kunststoffumspritzung frei gelassen sind. Zunächst ist in diesem Zusammenhang festzuhalten, dass Kunststoff im Wärmeübertragungsverhalten Luft überlegen ist; mit Kunststoff umspritzte Windungen der Statorwicklungen können also vorteilhaft die Wärme besser verteilen als nur von Luft umgebene. Wird ein Stator mit Kunststoff umspritzt, kann außerdem auf eine aufwendige Fixierung der einzelnen Drähte der Statorpakete verzichtet werden. Werden darüber hinaus die radial inneren Enden der Statorbleche von der Kunststoffumspritzung frei gelassen, erfolgt eine besonders gute Wärmeabfuhr durch die an den freien Statorblechenden vorbeistreichende Flüssigkeit, die durch den Ringspalt gesaugt wird.

Die radial inneren Enden der Statorbleche können hierbei grundsätzlich bündig mit der Kunststoffumspritzung im Ringspalt abschließen. Im Hinblick auf einerseits einen möglichst großen Strömungsquerschnitt am Ringspalt zwischen Stator und Rotor bei andererseits einem dennoch kleinen, energieeffizienten radialen Abstand zwischen den Statorblechenden und dem Rotor bevorzugt ist es indes, wenn die radial inneren Enden der Statorbleche nach radial innen über die Kunststoffumspritzung vorstehen und mit Letzterer Nuten begrenzen, die vorteilhaft einen Teil des Strömungswegs bilden. Vorzugsweise handelt es sich hierbei um Axialnuten, die sich im Wesentlichen parallel zur Drehachse erstrecken und somit für kurze Strömungswege sorgen. Andere Verläufe der Nuten sind indes ebenfalls denkbar, z.B. ein im Wesentlichen schraubenförmiger Verlauf, der bei entsprechender Ausrichtung bezüglich der Drehrichtung des Rotors eine zusätzliche Förderwirkung im Ringspalt bereitstellen könnte.

Die durch den kunststoffumspritzten Stator gebildeten Nuten können hierbei prinzipiell kürzer sein als der Ringspalt. Im Hinblick auf wiederum einen möglichst großen Strömungsquerschnitt im Bereich des Ringspalts bevorzugt ist es allerdings, wenn sich die Nuten wenigstens über die Länge des Rotors erstrecken.

In einer besonders bevorzugten Ausgestaltung der Flüssigkeitspumpe kann ferner der Rotor des Elektromotors auf der von der Zwischenwand abgewandten Seite des Rotors im Gehäuse fliegend gelagert sein. Dies ist zum einen einem axial kurzen Aufbau der Flüssigkeitspumpe förderlich; zum anderen besteht ein Vorteil gegenüber einer Lagerung des Rotors (auch) an der Zwischenwand darin, dass die Zwischenwand von der angesaugten Flüssigkeit besser angeströmt und über eine größere Fläche gekühlt werden kann.

Im weiteren Verfolg des Erfindungsgedankens kann - muss aber nicht - die Zwischenwand des Gehäuses auf ihrer dem Rotor zugewandten Seite einen bezüglich der Drehachse konzentrisch angeordneten, in Richtung des Rotors vorkragenden Fortsatz zur Strömungsumlenkung aufweisen. Ein solcher Fortsatz begünstigt vorteilhaft die Umlenkung der Strömung der angesaugten Flüssigkeit von der Zwischenwand in Richtung des Rotors bzw. dessen wenigstens einen Durchgang. Hierbei kann der Fortsatz eine zentrale Aussparung aufweisen, in der ein mit dem Rotor verbundener Magnet aufgenommen ist, der einer Sensierung der Winkellage des Rotors um die Drehachse dient. Wird für die elektronische, d.h. bürstenlose Kommutierung des Elektromotors überhaupt ein Magnet zur Erfassung der Drehposition des Rotors benötigt, kann zur Unterbringung des Magneten also in Platz sparender Weise ein im Fortsatz vorgesehener Innenraum dienen.

Des Weiteren kann der Rotor mehrere, insbesondere im Wesentlichen parallel zur Drehachse verlaufende Durchgänge aufweisen, die bezüglich der Drehachse auf einer radialen Höhe liegen, welche gleich oder größer als ein Außenradius des Fortsatzes ist. Durch das Vorsehen von mehreren Durchgängen im Rotor lässt sich zunächst auf einfache Weise der Strömungsquerschnitt für die durch den Rotor gesaugte Flüssigkeit vergrößern. Grundsätzlich können die Durchgänge hierbei z.B. in der Art einer Schraubenlinie verlaufen, insbesondere wenn dies in Verbindung mit der Drehung des Rotors noch eine Förderwirkung hervorruft. Parallel zur Drehachse verlaufende Durchgänge sind indes einfacher und kostengünstiger herzustellen. Durch die radiale Lage der Durchgänge auf Höhe bzw. außerhalb des Durchmessers des Fortsatzes kann ferner bewirkt werden, dass der Fortsatz die angesaugte Flüssigkeit direkt in die Durchgänge umlenkt. Auch dies begünstigt die gewollte Zirkulation der angesaugten Flüssigkeit im Gehäuse der Flüssigkeitspumpe bevor die Flüssigkeit den Saugeingang die Fördereinrichtung erreicht.

Um die Kaltlaufeigenschaften der Flüssigkeitspumpe zu verbessern, kann außerdem eine Bypass-Verbindung vorgesehen sein, die den Sauganschluss des Gehäuses in Strömungsrichtung gesehen vor dem Ringspalt mit dem Saugeingang der Fördereinrichtung verbindet. Somit kann bei besonders niedrigen Temperaturen und höher viskosen Flüssigkeiten dafür Sorge getragen werden, dass ein Teil der angesaugten Flüssigkeit den Ringspalt zwischen Stator und Rotor zu umgehen vermag, so dass auch unter diesen erschwerten Voraussetzungen die gewünschten Pumpendurchsätze und/oder Drücke am Druckanschluss der Flüssigkeitspumpe erzielt werden können. In besonders einfacher Ausgestaltung kann die Bypass-Verbindung hierbei durch einen weiteren Ringspalt zwischen einer Innenumfangsfläche des Rotors und einer Wandfläche des Gehäuses ausgebildet sein.

In einer vorteilhaften Weiterbildung der Flüssigkeitspumpe kann das Gehäuse außerdem auf der vom Rotor abgewandten Seite der Zwischenwand durch einen metallischen Deckel verschlossen sein, der sich zur Wärmeabfuhr nach außen nahe der Leistungselektronik über die Leistungselektronik hinweg erstreckt und auf seiner von der Leistungselektronik abgewandten Seite ggf. mit einer oberflächenvergrößernden Struktur, wie Kühlrippen, versehen ist. Eine derartige gezielte, ergänzende Wärmeabfuhr über ein Teil des Gehäuses ist bei höheren Pumpenleistungen und entsprechend stärker ausgelegter Leistungselektronik von Vorteil.

Wenngleich der Rotor des Elektromotors und die damit antriebsverbundene Fördereinrichtung grundsätzlich auf der Drehachse der Flüssigkeitspumpe - ggf. mit Abstand zueinander - hintereinander angeordnet sein können, ist es im Hinblick auf eine axial besonders kurz bauende Flüssigkeitspumpe bevorzugt, wenn der Rotor im Wesentlichen becherförmig ausgebildet ist und einen Innenraum begrenzt, in dem die Fördereinrichtung wenigstens teilweise aufgenommen ist.

In besonders leichter und insbesondere in der Massenfertigung kostengünstiger Ausgestaltung der Flüssigkeitspumpe kann das Gehäuse ferner vornehmlich aus Kunststoff bestehen, wobei der Rotor des Elektromotors über eine Motorwelle unmittelbar im Kunststoff des Gehäuses gelagert ist, d.h. spezielle Lager, wie Kugellager od.dgl., sind hier entbehrlich. Dabei kann die Anordnung vorzugsweise so getroffen sein, dass der Rotor des Elektromotors mit der Fördereinrichtung vermittels der Motorwelle antriebsverbunden ist, die zu beiden Seiten der Fördereinrichtung über je eine Lagerstelle im Gehäuse gelagert ist, wobei die vom Rotor fernere Lagerstelle für die Motorwelle über deren Antriebsverbindung zur Fördereinrichtung geschmiert ist, so dass auf zusätzliche Maßnahmen zur Lagerschmierung verzichtet werden kann.

Als Fördereinrichtung in Frage kommen schließlich prinzipiell verschiedene Pumpentypen: So kann die Fördereinrichtung der erfindungsgemäßen Flüssigkeitspumpe etwa in der Art einer Kolbenpumpe, einer Flügelzellenpumpe, einer Rollenzellenpumpe, einer Kreiselpumpe oder irgendeiner Zahnradpumpe ausgebildet sein. Für einen eher niedrigen Druckbereich ist insbesondere im Hinblick auf geringe Herstellkosten eine Ausgestaltung der Flüssigkeitspumpe bevorzugt, bei der die Fördereinrichtung in der Art einer Innenzahnradpumpe ausgebildet ist, mit einem vom Rotor des Elektromotors drehangetriebenen, bezüglich der Drehachse konzentrisch angeordneten Zahnrad mit Außenverzahnung und einem mit der Außenverzahnung kämmenden, bezüglich der Drehachse exzentrisch im Gehäuse geführten Zahnring mit Innenverzahnung, die mit der Außenverzahnung zusammenwirkt, um die Flüssigkeit zu fördern. Eine solche Fördereinrichtung benötigt demgemäß lediglich zwei, ggf. gesinterte Rotorteile (Zahnrad und Zahnring).

### KURZE BESCHREIBUNG DER ZEICHNUNGEN

Im Folgenden wird die Erfindung anhand eines bevorzugten Ausführungsbeispiels unter Bezugnahme auf die beigefügten, z.T. schematischen Zeichnungen näher erläutert, in denen zur Vereinfachung der Darstellung elastomere bzw. elastische Teile im unverformten Zustand dargestellt sind. In den Zeichnungen zeigen:
- Fig. 1: eine Draufsicht auf eine elektromotorisch angetriebene Flüssigkeitspumpe nach einem bevorzugten Ausführungsbeispiel der Erfindung im nicht-montierten Zustand, mit Blick auf eine hydraulische Anschlussseite der Flüssigkeitspumpe, auf der deren Gehäuse einen Sauganschluss und einen Druckanschluss besitzt;
- Fig. 2: eine Schnittansicht der Flüssigkeitspumpe gemäß Fig. 1 entsprechend der Schnittverlaufslinie II-II in Fig. 1, wobei die Strömungsrichtungen der geförderten Flüssigkeit mit Pfeilen angedeutet sind;
- Fig. 3: eine hinsichtlich des Schnittverlaufs der Fig. 2 entsprechende Schnittansicht der Flüssigkeitspumpe gemäß Fig. 1, in der zur Veranschaulichung weiterer Details im Gehäuse die drehenden Bauteile eines Elektromotors und einer Fördereinrichtung der Flüssigkeitspumpe weggelassen wurden;
- Fig. 4: eine Schnittansicht der Flüssigkeitspumpe gemäß Fig. 1 entsprechend der Schnittverlaufslinie IV-IV in Fig. 2, und zwar in einer Ebene, in der weitere Details des Elektromotors und der damit antriebsverbundenen Fördereinrichtung zu erkennen sind;
- Fig. 5: eine im Maßstab vergrößerte Teilschnittansicht der Flüssigkeitspumpe gemäß Fig. 1 entsprechend dem Detailkreis V in Fig. 4, zur besseren Illustration eines zwischen Rotor und Stator des Elektromotors ausgebildeten Ringspalts und von an diesen angrenzenden Axialnuten am Innenumfang des Stators;
- Fig. 6: eine perspektivische Explosionsansicht der Flüssigkeitspumpe gemäß Fig. 1, die in der Zeichnungsebene von Fig. 1 um 90° entgegen dem Uhrzeigersinn gedreht wurde, von schräg unten / hinten rechts, beginnend mit Blick auf einen metallischen Deckel des Gehäuses;
- Fig. 7: eine vergrößerte Darstellung des insbesondere den metallischen Deckel, eine Leistungselektronik und einen Motorgehäuseabschnitt des Gehäuses zeigenden Details VII in Fig. 6;
- Fig. 8: eine vergrößerte Darstellung des Details VIII in Fig. 6, das insbesondere den auf einer Motorwelle sitzenden Rotor des Elektromotors, einen Pumpengehäuseabschnitt des Gehäuses sowie einen Zahnring und ein Zahnrad der Fördereinrichtung zeigt; und
- Fig. 9: eine vergrößerte Darstellung des Details IX in Fig. 6, das insbesondere einen Anschlussgehäuseabschnitt des Gehäuses zeigt, an dem der Sauganschluss und der Druckanschluss der Flüssigkeitspumpe ausgebildet sind.

### DETAILLIERTE BESCHREIBUNG DES AUSFÜHRUNGSBEISPIELS

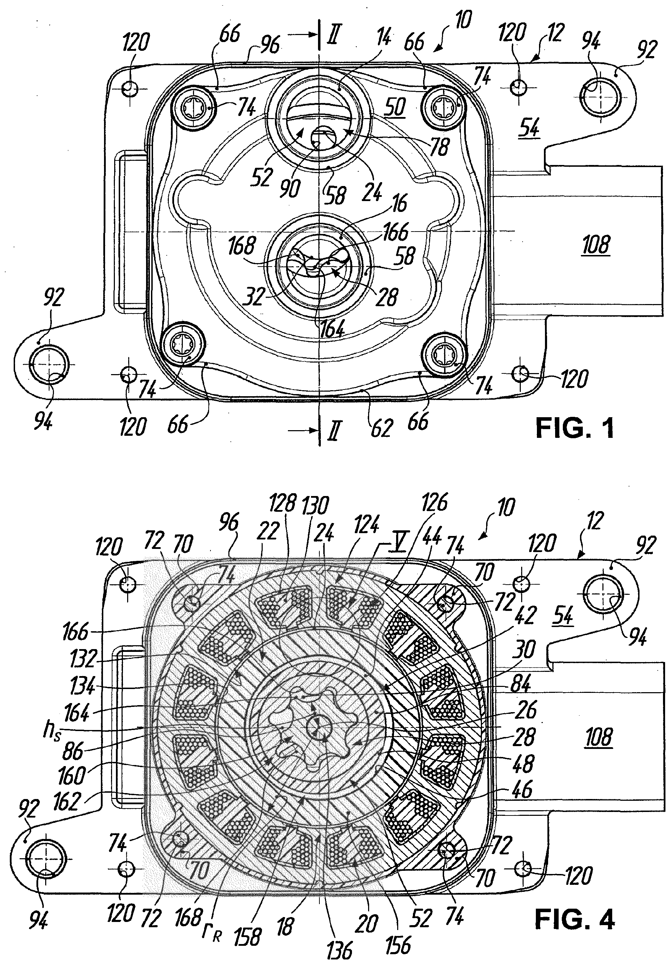

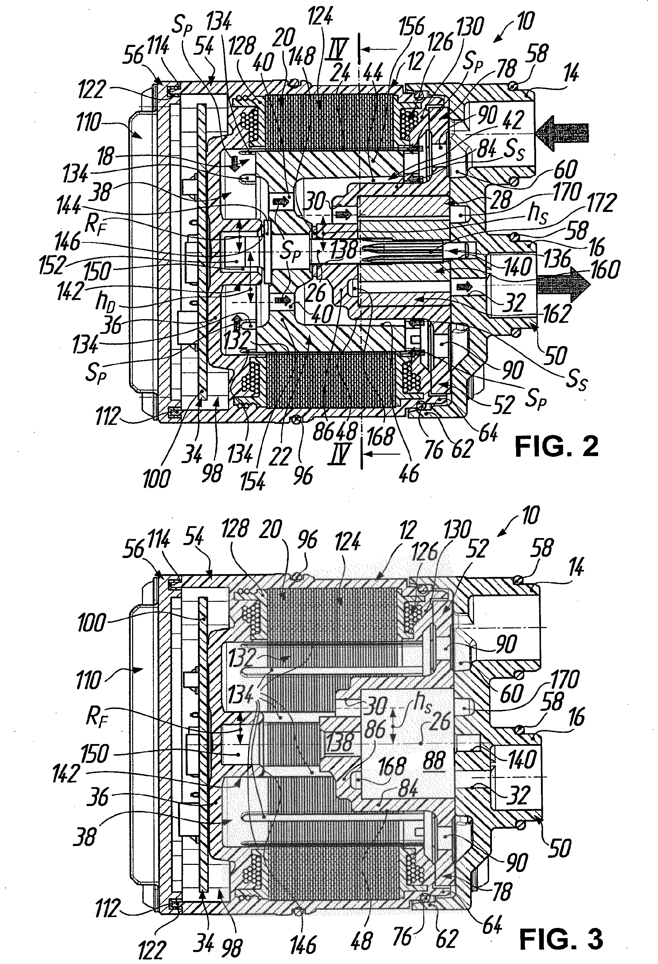

In den Figuren beziffert das Bezugszeichen 10 allgemein eine elektromotorisch angetriebene Flüssigkeitspumpe, die in bzw. an einem Getriebe für Kraftfahrzeuge insbesondere als Ölpumpe für Kühlungs- und/oder Schmierzwecke eingesetzt werden kann. Die Flüssigkeitspumpe 10 hat ein allgemein mit 12 beziffertes Gehäuse, welches einen Sauganschluss 14 und einen Druckanschluss 16 aufweist. Wie insbesondere die Fig. 2 zeigt, ist in dem Gehäuse 12 ein Elektromotor 18 angeordnet, der einen gehäuseseitigen Stator 20 und einen innenlaufenden Rotor 22 umfasst. Der Rotor 22 ist innerhalb des Stators 20 unter Belassung eines Ringspalts 24 aufgenommen und um eine Drehachse 26 drehend antreibbar. Mit dem Rotor 22 des Elektromotors 18 ist eine in den Fig. 2 und 4 allgemein mit 28 bezifferte Fördereinrichtung antriebsverbunden, die einen mit dem Sauganschluss 14 des Gehäuses 12 fluidverbundenen Saugeingang 30 und einen mit dem Druckanschluss 16 des Gehäuses 12 fluidverbundenen Druckausgang 32 aufweist. Ferner ist in dem Gehäuse 12 eine Leistungselektronik 34 zur Ansteuerung des Elektromotors 18 vorgesehen. Dabei besitzt das Gehäuse 12 eine im Wesentlichen quer zur Drehachse 26 verlaufende, dem Rotor 22 benachbarte Zwischenwand 36. Die Zwischenwand 36 begrenzt einen im Betrieb mit der zu fördernden Flüssigkeit gefluteten Innenraum 38 des Gehäuses 12, in dem der Rotor 22 demgemäß nass läuft. Auf der vom Rotor 22 abgewandten, trockenen Seite der Zwischenwand 36 ist die Leistungselektronik 34 im Gehäuse 12 montiert.

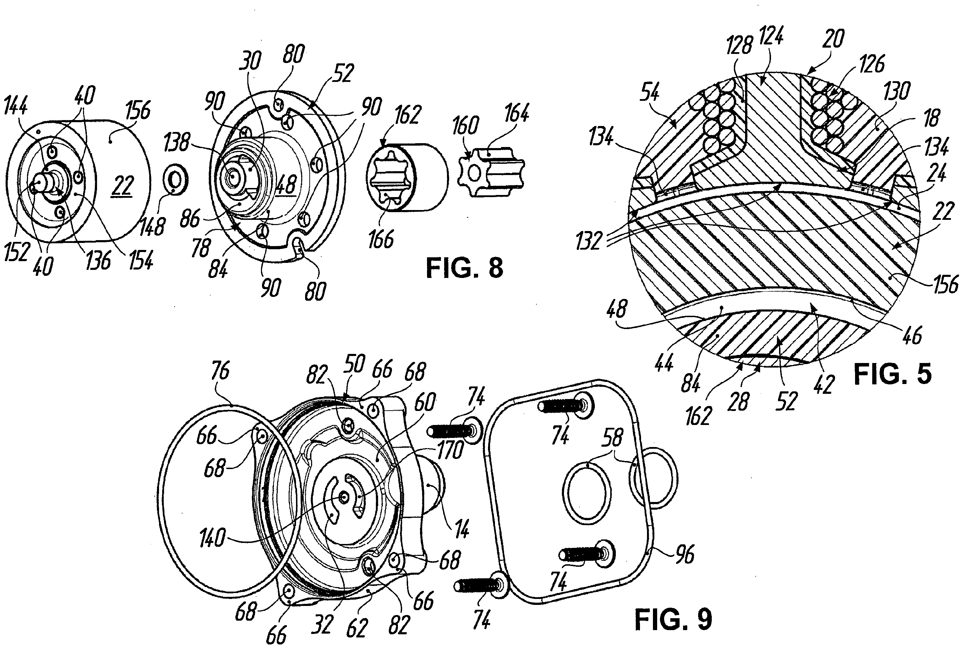

Wie nachfolgend noch näher beschrieben werden wird, ist der Saugeingang 30 der Fördereinrichtung 28 bezüglich der Drehachse 26 auf einer radialen Höhe h_{S} angeordnet, die kleiner als ein Innenradius r_{R} des Ringspalts 24 ist (vgl. die Fig. 2 und 4). Entlang der Drehachse 26 gesehen liegt der Saugeingang 30 also (zumindest teilweise) radial innerhalb des Ringspalts 24. Unterdessen besitzt der Rotor 22 wenigstens einen Durchgang 40 - im dargestellten Ausführungsbeispiel sogar vier um die Drehachse 26 gleichmäßig winkelbeabstandete Durchgänge 40 (vgl. die Fig. 8) - der, wie in Fig. 2 dargestellt ist, auf einer bezüglich der Drehachse 26 im Wesentlichen konstanten (oder - nicht gezeigt - zum Saugeingang der Fördereinrichtung hin zunehmenden) radialen Höhe h_{D} verläuft. Mit anderen Worten gesagt ändert sich der radiale Abstand des inneren Durchgangs 40 im Rotor 22 zu der Drehachse 26 entlang des Durchgangs 40 gesehen nicht (oder aber er nimmt - in der nicht dargestellten alternativen Ausgestaltung des Rotors - entlang des Durchgangs in einer Richtung von der Zwischenwand zu der Fördereinrichtung hin gesehen zu). Durch diese radiale Anordnung der Strömungsquerschnitte wird in der Flüssigkeitspumpe 10 eine saugseitige Primärströmung der zu fördernden Flüssigkeit erzwungen, bei der eine von dem Saugeingang 30 der Fördereinrichtung 28 über den Sauganschluss 14 des Gehäuses 12 angesaugte Flüssigkeit teilweise über den Ringspalt 24 zwischen Stator 20 und Rotor 22 zwangsgeführt ist und an der Zwischenwand 36 des Gehäuses 12 unter Kühlung der Zwischenwand 36 eine Umlenkung erfährt bevor sie durch den Durchgang 40 (bzw. die Durchgänge) des Rotors 22 hindurch zum Saugeingang 30 der Fördereinrichtung 28 gelangt. Diese sich im Innenraum 38 des Gehäuses 12 ergebende Primärströmung vom Sauganschluss 14 des Gehäuses 12 über den Umfang des Rotors 22 zur Zwischenwand 36 hin und von dort durch das Innere des Rotors 22 zurück zur Fördereinrichtung 28 ist in Fig. 2 durch die Pfeile S_{P} angedeutet. Mit dieser Primärströmung S_{P} wird der Stator 20 des Elektromotors 18 ebenso wie die durch die Leistungselektronik 34 aufgeheizte Zwischenwand 36 des Gehäuses 12 gekühlt bzw. ein Teil der im Stator 20 und in der Leistungselektronik 34 generierten Wärme abgeführt.

Im dargestellten Ausführungsbeispiel ist ferner zur Verbesserung der Kaltlaufeigenschaften der Flüssigkeitspumpe 10 eine Bypass-Verbindung 42 vorgesehen, die den Sauganschluss 14 des Gehäuses 12 in Strömungsrichtung gesehen vor dem Ringspalt 24 zwischen Stator 20 und Rotor 22 mit dem Saugeingang 30 der Fördereinrichtung 28 verbindet. Diese Bypass-Verbindung 42 ist hier durch einen weiteren Ringspalt 44 zwischen einer Innenumfangsfläche 46 des Rotors 22 und einer Wandfläche 48 des Gehäuses 12 ausgebildet. Hierdurch ergibt sich vornehmlich im An- bzw. Kaltlauf der Flüssigkeitspumpe 10 eine Sekundärströmung der von der Fördereinrichtung 28 angesaugten Flüssigkeit, die in Fig. 2 mit den Pfeilen S_{S} angedeutet ist. Somit kann auch im Kaltzustand der Flüssigkeitspumpe 10 insbesondere bei höher viskosen Ölen als zu fördernde Flüssigkeit ein gewünschtes Fördervolumen gewährleistet werden.

Weitere Details des vornehmlich aus Kunststoff spritzgegossenen Gehäuses 12 sind insbesondere den Fig. 3 und 6 bis 9 zu entnehmen. Demgemäß besteht das Gehäuse 12 im Wesentlichen aus vier Teilen bzw. Abschnitten, nämlich - in Fig. 3 von rechts nach links gesehen - einem Anschlussgehäuseabschnitt 50, einem Pumpengehäuseabschnitt 52, einem Motorgehäuseabschnitt 54 und einem Deckel 56, der im dargestellten Ausführungsbeispiel als einziger Gehäuseabschnitt aus einem Metall, genauer einer Aluminiumlegierung geformt ist.

An dem Anschlussgehäuseabschnitt 50 sind auf seiner in Fig. 1 oberen und in den Fig. 2 und 3 rechten Außenseite der Sauganschluss 14 und der Druckanschluss 16 der Flüssigkeitspumpe 10 angeformt. Am Außenumfang jedes Anschlusses 14, 16 ist ein O-Ring 58 montiert, welcher jeweils zur Abdichtung gegenüber einem getriebeseitigen Anschlussgegenstück (nicht gezeigt) dient. Auf der in den Fig. 2 und 3 linken Innenseite des Anschlussgehäuseabschnitts 50 ist eine gemäß Fig. 9 im Wesentlichen kreisringförmige Vertiefung 60 ausgebildet, die den Sauganschluss 14 schneidet und daher mit diesem kommuniziert. Radial innerhalb der umlaufenden Vertiefung 60 und getrennt hiervon befindet sich der in einer Draufsicht gesehen im Wesentlichen nierenförmige Druckausgang 32 der Fördereinrichtung 28 (vgl. Fig. 9), der sich durch den Anschlussgehäuseabschnitt 50 hindurch erstreckt und gemäß den Fig. 2 und 3 in dem Druckanschluss 16 der Flüssigkeitspumpe 10 mündet.

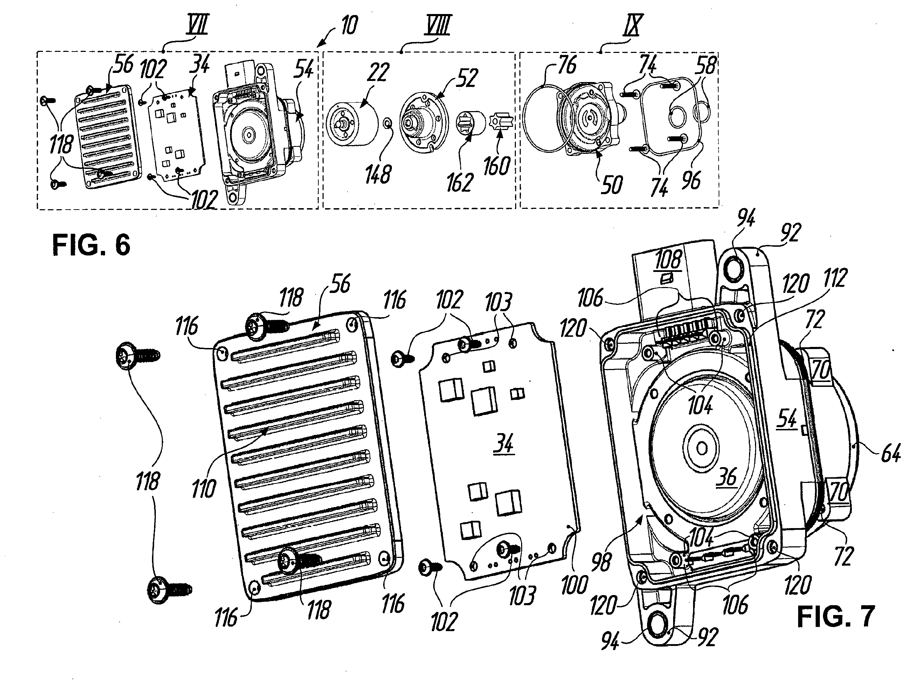

Ferner weist der Anschlussgehäuseabschnitt 50 auf seiner von den Anschlüssen 14, 16 abgewandten Seite einen Kragen 62 auf, mit dem der Anschlussgehäuseabschnitt 50 auf einem zugeordneten Ringvorsprung 64 des Motorgehäuseabschnitts 54 aufgesteckt ist. Am Außenumfang des Kragens 62 sind gemäß den Fig. 1 und 9 Befestigungsohren 66 mit Durchgangsbohrungen 68 ausgebildet. Wie in den Fig. 4 und 7 zu sehen ist, weist der Motorgehäuseabschnitt 54 an seinem Außenumfang den Befestigungsohren 66 des Anschlussgehäuseabschnitts 50 jeweils zugeordnete Befestigungsohren 70 mit Schraublöchern 72 auf. Die Befestigung des Anschlussgehäuseabschnitts 50 am Motorgehäuseabschnitt 54 erfolgt mittels Befestigungsschrauben 74 (siehe die Fig. 1, 4 und 9), die sich durch die Durchgangsbohrungen 68 in den Befestigungsohren 66 des Anschlussgehäuseabschnitts 50 hindurch erstrecken und in den Schraublöchern 72 der Befestigungsohren 70 des Motorgehäuseabschnitts 54 eingeschraubt sind, um den Anschlussgehäuseabschnitt 50 gegen den Motorgehäuseabschnitt 54 zu verspannen. Ein zwischen dem Ringvorsprung 64 des Motorgehäuseabschnitts 54 und dem Kragen 62 des Anschlussgehäuseabschnitts 50 eingefügter elastomerer Runddichtring 76 dichtet den Innenraum 38 des Gehäuses 12 gegenüber der Umgebung ab.

Wie des Weiteren die Fig. 2 und 3 zeigen, ist der Pumpengehäuseabschnitt 52 zugleich zwischen dem Anschlussgehäuseabschnitt 50 und dem Motorgehäuseabschnitt 54 bezüglich der Drehachse 26 zentriert gehalten, und zwar über einen ringförmigen Befestigungsflansch 78, der axial zwischen dem Anschlussgehäuseabschnitt 50 und dem Motorgehäuseabschnitt 54 eingespannt ist. Der Pumpengehäuseabschnitt 52 ist hierbei über zwei am Motorgehäuseabschnitt 54 angebrachte Zapfen (nicht gezeigt), die zugeordnete Aussparungen 80 (siehe Fig. 8) im Befestigungsflansch 78 des Pumpengehäuseabschnitts 52 durchgreifen und in korrespondierenden Positionierlöchern 82 (vgl. Fig. 9) des Anschlussgehäuseabschnitts 50 eingesteckt sind, positioniert und auch in der Winkellage um die Drehachse 26 orientiert.

An den Befestigungsflansch 78 des Pumpengehäuseabschnitts 52 schließt sich radial innen ein in Richtung des Innenraums 38 vorkragender, becherförmiger Bereich an, mit einem radial außen die vorerwähnte Wandfläche 48 bildenden Mantelabschnitt 84 und einem Bodenabschnitt 86, die gemäß Fig. 3 - zusammen mit dem Anschlussgehäuseabschnitt 50 - einen Aufnahmeraum 88 für die bewegten Teile der Fördereinrichtung 28 begrenzen, die später noch näher beschrieben werden. Während im Bodenabschnitt 86 der in einer Draufsicht gesehen im Wesentlichen nierenförmig ausgebildete Saugeingang 30 der Fördereinrichtung 28 vorgesehen ist (vgl. Fig. 8), ist der Befestigungsflansch 78 des Pumpengehäuseabschnitts 52 mit einer Mehrzahl (hier sechs) von gleichmäßig winkelbeabstandeten Durchgangsbohrungen 90 versehen, welche bezüglich der Drehachse 26 auf einer solchen radialen Höhe sitzen, dass sie die mit dem Sauganschluss 14 kommunizierende ringförmige Vertiefung 60 im Anschlussgehäuseabschnitt 50 mit dem Innenraum 38 des Motorgehäuseabschnitts 54 verbinden, wie in den Fig. 2 und 3 zu erkennen ist.

Gemäß den Fig. 1, 4 und 7 weist der Motorgehäuseabschnitt 54 außen zwei weitere, größere Befestigungsohren 92 auf, die bezüglich der Drehachse 26 einander diametral gegenüberliegen und mit Verstärkungshülsen 94 ausgekleidet dazu dienen, die Flüssigkeitspumpe 10 an einer Wandung (nicht gezeigt) eines Getriebegehäuses zu montieren. Ein am Außenumfang des Motorgehäuseabschnitts 54 angebrachter Runddichtring 96 dichtet hierbei gegenüber der Wandung des Getriebegehäuses ab.

Wie insbesondere die Fig. 7 zeigt, definiert der Motorgehäuseabschnitt 54 ferner einen in einer Draufsicht gesehen im Wesentlichen rechteckigen Elektronikraum 98 zur Aufnahme der Leistungselektronik 34. Die Zwischenwand 36 trennt hierbei den im Betrieb der Flüssigkeitspumpe 10 mit der zu fördernden Flüssigkeit gefluteten bzw. gefüllten, rotorseitigen Innenraum 38 von dem trockenen Elektronikraum 98. Eine Platine 100 der Leistungselektronik 34 ist im dargestellten Ausführungsbeispiel mittels Befestigungsschrauben 102, die Befestigungsbohrungen 103 (siehe Fig. 7) in der Platine 100 durchgreifen, an Schraubvorsprüngen 104 montiert, die an dem Motorgehäuseabschnitt 54 angeformt in den Elektronikraum 98 vorkragen, so dass sich die Platine 100 sehr nahe an der Zwischenwand 36 über diese hinweg erstreckt - ggf. sogar unter Anlage an der Zwischenwand 36 - wie in den Fig. 2 und 3 zu sehen ist. Die Platine 100 der Leistungselektronik 34 ist hierbei über im Motorgehäuseabschnitt 54 eingebettete, elektrische Kontakte 106 auf nicht näher gezeigte Weise mit dem Stator 20 des Elektromotors 18 und einem in den Fig. 1, 4 und 7 bei 108 angedeuteten Elektroanschluss der Flüssigkeitspumpe 10 elektrisch kontaktiert.

Auf der vom Rotor 22 abgewandten Seite der Zwischenwand 36 ist das Gehäuse 12 schließlich durch den metallischen Deckel 56 verschlossen, der sich zur Wärmeabfuhr nach außen nahe der Leistungselektronik 34 über diese hinweg erstreckt. Im dargestellten Ausführungsbeispiel ist der Deckel 56 auf seiner von der Leistungselektronik 34 abgewandten Seite mit einer oberflächenvergrößernden Struktur 110 (hier in Form von Kühlrippen) versehen, so dass der Deckel 56 auch als Kühlkörper dient. Zur zentrierten Befestigung des Deckels 56 am Motorgehäuseabschnitt 54 ist Letzterer auf seiner in den Fig. 2 und 3 linken Stirnseite mit einem umlaufenden, axial vorkragenden Rand 112 versehen, der in einer komplementär geformten, umlaufenden Nut 114 im Deckel 56 eingesteckt ist. Hierbei ist der im Wesentlichen rechteckige Deckel 56 gemäß Fig. 7 an seinen Ecken in radialer Richtung gesehen außerhalb der Nut 114 mit Durchgangsbohrungen 116 versehen. Befestigungsschrauben 118 durchgreifen die Durchgangsbohrungen 116 im Deckel 56 und sind in zugeordneten Schraublöchern 120 im Motorgehäuseabschnitt 54 eingeschraubt. Eine vor dem Aufstecken und Verschrauben des Deckels 56 auf bzw. mit dem Motorgehäuseabschnitt 54 in die Nut 114 eingebrachte Flüssigkeitsdichtung 122 (siehe die Fig. 2 und 3) verhindert im Betrieb der Flüssigkeitspumpe 10, dass Feuchtigkeit in den Elektronikraum 98 eindringen kann.

Weitere Details zum Elektromotor 18 der Flüssigkeitspumpe 10 sind den Fig. 2 bis 5 zu entnehmen. Der Stator 20 des Elektromotors 18 weist eine Mehrzahl von metallischen Statorblechen 124 (hier ca. 50 Bleche) auf, die den Eisenkern des Stators 20 bilden. Die Statorbleche 124 tragen in an sich bekannter Weise elektrische Statorwicklungen 126 und sind mit diesen vermittels einer Kunststoffumspritzung fest verbunden. Wie in den Fig. 2 bis 5 zu erkennen ist, umfasst die Kunststoffumspritzung hierbei eine Vorumspritzung 128 mit Kunststoff zwischen dem Paket aus Statorblechen 124 und den Statorwicklungen 126 sowie eine Fertigumspritzung 130 mit Kunststoff, welche bei Ausbildung des Motorgehäuseabschnitts 54 entsteht und durch die der Stator 20 im Motorgehäuseabschnitt 54 integriert wird, so dass der Stator 20 im Ergebnis mit dem Motorgehäuseabschnitt 54 des Gehäuses 12 einstückig ausgebildet ist. Gemäß den Fig. 4 und 5 besitzen die Statorbleche 124 radial innere Enden 132, welche an dem Ringspalt 24 angrenzen bzw. diesen radial außen begrenzen. Dabei sind die Statorbleche 124 und die Statorwicklungen 126 mittels der vorerwähnten Kunststoffumspritzung 128, 130 derart miteinander verbunden, dass die radial inneren Enden 132 der Statorbleche 124 von der Kunststoffumspritzung 128, 130 frei gelassen, also "metallisch blank" belassen sind, so dass im Betrieb der Flüssigkeitspumpe 10 durch den Ringspalt 24 fließende Flüssigkeit unmittelbar an den radial inneren Enden 132 der Statorbleche 124 entlang streichen kann, und zwar mit sehr guter Wärmeübertragung von den Statorblechen 124 auf die vorbeiströmende Flüssigkeit.

Wie ferner insbesondere die Fig. 3 und 5 zeigen, ist die vorerwähnte Kunststoffumspritzung 128, 130 derart ausgebildet, dass die radial inneren Enden 132 der Statorbleche 124 nach radial innen über die Kunststoffumspritzung vorstehen und mit Letzterer Nuten 134, im dargestellten Ausführungsbeispiel Axialnuten begrenzen, die im Wesentlichen parallel zur Drehachse 26 verlaufen. Gemäß Fig. 2 erstrecken sich die Nuten 134, die einen zusätzlichen Strömungsquerschnitt im Bereich des Ringspalts 24 bereitstellen, über die axiale Länge des Rotors 22 hinaus.

Einzelheiten zum Rotor 22 des Elektromotors 18 sind insbesondere der Fig. 2 zu entnehmen. Der im Wesentlichen becherförmige Rotor 22 besteht aus einem kunststoffgebundenen Ferrit, der auf einer metallischen Motorwelle 136 aufgespritzt ist, über die der Rotor 22 unmittelbar im Kunststoff des Gehäuses 12 um die Drehachse 26 drehbar gelagert ist. Genauer gesagt ist der Rotor 22 vermittels der Motorwelle 136 auf der von der Zwischenwand 36 abgewandten Seite des Rotors 22 fliegend im Gehäuse 12 gelagert. Dabei erstreckt sich die eine Antriebsverbindung zwischen dem Rotor 22 des Elektromotors 18 und der Fördereinrichtung 28 herstellende Motorwelle 136 durch die Fördereinrichtung 28 hindurch und ist zu beiden Seiten derselben über je eine Lagerstelle im Gehäuse 12 gelagert, nämlich eine dem Rotor 22 nähere, zentrale Lagerstelle 138 im Bodenabschnitt 86 des Pumpengehäuseabschnitts 52 und eine vom Rotor 22 fernere, zentrale Lagerstelle 140 auf der Innenseite des Anschlussgehäuseabschnitts 50 (siehe auch die Fig. 3).

Auf der in Fig. 2 linken Seite des Rotors 22 weist die Zwischenwand 36 des Gehäuses 12 auf ihrer dem Rotor 22 zugewandten Seite einen bezüglich der Drehachse 26 konzentrisch angeordneten, in Richtung des Rotors 22 vorkragenden Fortsatz 142 zur Umlenkung der Primärströmung S_{P} auf. Zur verschleißarmen Aufnahme axialer Lasten am Rotor 22 wirkt ein an der Motorwelle 136 ausgebildeter Ringbund 144 auf der einen Stirnseite des Rotors 22 mit einer ringförmigen Stirnfläche 146 des Fortsatzes 142 anlaufscheibenartig zusammen, während auf der gegenüberliegenden Stirnseite des Rotors 22 eine die Motorwelle 136 umgebende Anlaufscheibe 148 zwischen dem Rotor 22 und der Lagerstelle 138 im Pumpengehäuseabschnitt 52 eingefügt ist. In den Fig. 2 und 3 ist ferner zu sehen, dass der Fortsatz 142 eine zentrale Aussparung 150 aufweist, in der ein mit dem Rotor 22 über die Motorwelle 136 verbundener Magnet 152 aufgenommen ist, der im dargestellten Ausführungsbeispiel im Zusammenspiel mit einem Sensor (nicht näher gezeigt) auf der Platine 100 der Leistungselektronik 34 einer Sensierung der Winkellage des Rotors 22 um die Drehachse 26 dient. Die so erfassten Winkellageinformationen werden in an sich bekannter Weise bei der elektrischen Kommutierung des bürstenlosen Gleichstrommotors 18 verwendet.

In den Fig. 2 und 8 ist ferner gut zu sehen, dass die vorerwähnten vier Durchgänge 40 in einem Bodenabschnitt 154 des im Wesentlichen becherförmigen Rotors 22 ausgebildet sind, und zwar derart, dass sie im Wesentlichen parallel zur Drehachse 26 verlaufen. Dabei liegen die Durchgänge 40 bezüglich der Drehachse 26 auf einer radialen Höhe h_{D}, welche hier größer als ein Außenradius R_{F} des Fortsatzes 142 ist, so dass die umgelenkte Primärströmung Sp direkt durch den Rotor 22 hindurchzutreten vermag. In Fig. 2 ist darüber hinaus zu erkennen, dass der Bodenabschnitt 154 des Rotors 22 zusammen mit dessen hohlzylindrischen Mantelabschnitt 156 einen Innenraum 158 begrenzt, in dem bzw. innerhalb dessen die Fördereinrichtung 28 teilweise aufgenommen ist, so dass die Anordnung axial sehr kompakt baut.

Details zur Fördereinrichtung 28 sind weiterhin insbesondere den Fig. 2 und 4 zu entnehmen. Demgemäß ist die Fördereinrichtung 28 im dargestellten Ausführungsbeispiel in der Art einer Innenzahnradpumpe ausgebildet, mit einem Zahnrad 160 und einem Zahnring 162 als gesinterte Gerotoren. Hierbei ist das vom Rotor 22 des Elektromotors 18 über die Motorwelle 136 drehangetriebene, bezüglich der Drehachse 26 konzentrisch angeordnete Zahnrad 160 mit einer Außenverzahnung 164 versehen, während der Zahnring 162 eine Innenverzahnung 166 aufweist und mittels des gemäß Fig. 4 zur Drehachse 26 seitlich versetzt ausgebildeten Mantelabschnitts 84 des Pumpengehäuseabschnitts 52 bezüglich der Drehachse 26 exzentrisch im Gehäuse 12 geführt ist. Bei rotierender Motorwelle 136 wirkt die Außenverzahnung 164 des Zahnrads 160 kämmend mit der Innenverzahnung 166 des Zahnrings 162 zusammen, um die Flüssigkeit vom Saugeingang 30 zum Druckausgang 32 zu fördern. Jeweils um 180° um die Drehachse 26 versetzt zum Saugeingang 30 bzw. zum Druckausgang 32 ist hierbei im Bodenabschnitt 86 des Pumpengehäuseabschnitts 52 bzw. auf der Innenseite des Anschlussgehäuseabschnitts 50 jeweils eine Schattenniere 168, 170 als Vertiefung im Kunststoffmaterial des Gehäuses 12 ausgebildet, um die Flüssigkeitsströmung zu vergleichmäßigen und Druckpulsationen zu unterdrücken. Die Antriebsverbindung zwischen der Motorwelle 136 und dem Zahnrad 160 erfolgt schließlich gemäß Fig. 2 über eine Kerbverzahnung 172, mit der Besonderheit, dass die vom Rotor 22 fernere Lagerstelle 140 im Anschlussgehäuseabschnitt 50 über diese Antriebsverbindung mit geschmiert ist.

Eine Flüssigkeitspumpe umfasst ein Gehäuse mit Sauganschluss und Druckanschluss, einen Elektromotor mit Stator und Rotor darin, eine von dem Rotor drehangetriebene Fördereinrichtung mit Saugeingang und Druckausgang, die mit dem Sauganschluss bzw. dem Druckanschluss kommunizieren, und eine Leistungselektronik für den Elektromotor auf der Rückseite einer dem Rotor benachbart quer zu dessen Drehachse verlaufenden Zwischenwand des Gehäuses. Für einen kompakten Aufbau bei gleichwohl optimierter Kühlung ist - auf die Drehachse bezogen - der Saugeingang auf einer Höhe angeordnet, die kleiner als ein Innenradius eines Ringspalts zwischen Stator und Rotor ist, während Letzterer einen Durchgang besitzt, der bevorzugt auf einer konstanten Höhe verläuft, so dass eine über den Sauganschluss angesaugte Flüssigkeit teilweise über den Ringspalt zwangsgeführt ist und an der Zwischenwand unter Kühlung derselben eine Umlenkung erfährt bevor sie durch den Rotordurchgang zum Saugeingang gelangt.

### BEZUGSZEICHENLISTE

- 10: Flüssigkeitspumpe
- 12: Gehäuse
- 14: Sauganschluss
- 16: Druckanschluss
- 18: Elektromotor
- 20: Stator
- 22: Rotor
- 24: Ringspalt
- 26: Drehachse
- 28: Fördereinrichtung
- 30: Saugeingang
- 32: Druckausgang
- 34: Leistungselektronik
- 36: Zwischenwand
- 38: Innenraum
- 40: Durchgang
- 42: Bypass-Verbindung
- 44: weiterer Ringspalt
- 46: Innenumfangsfläche
- 48: Wandfläche
- 50: Anschlussgehäuseabschnitt
- 52: Pumpengehäuseabschnitt
- 54: Motorgehäuseabschnitt
- 56: Deckel
- 58: O-Ring
- 60: ringförmige Vertiefung
- 62: Kragen
- 64: Ringvorsprung
- 66: Befestigungsohr
- 68: Durchgangsbohrung
- 70: Befestigungsohr
- 72: Schraubloch
- 74: Befestigungsschraube
- 76: Runddichtring
- 78: Befestigungsflansch
- 80: Aussparung
- 82: Positionierloch
- 84: Mantelabschnitt
- 86: Bodenabschnitt
- 88: Aufnahmeraum
- 90: Durchgangsbohrung
- 92: Befestigungsohr
- 94: Verstärkungshülse
- 96: Runddichtring
- 98: Elektronikraum
- 100: Platine
- 102: Befestigungsschraube
- 103: Befestigungsbohrung
- 104: Schraubvorsprung
- 106: elektrische Kontakte
- 108: Elektroanschluss
- 110: oberflächenvergrößernde Struktur
- 112: Rand
- 114: Nut
- 116: Durchgangsbohrung
- 118: Befestigungsschraube
- 120: Schraubloch
- 122: Flüssigkeitsdichtung
- 124: Statorbleche
- 126: Statorwicklungen
- 128: Vorumspritzung mit Kunststoff
- 130: Fertigumspritzung mit Kunststoff
- 132: radial innere Enden
- 134: Nut
- 136: Motorwelle
- 138: Lagerstelle
- 140: Lagerstelle
- 142: Fortsatz
- 144: Ringbund
- 146: ringförmige Stirnfläche
- 148: Anlaufscheibe
- 150: Aussparung
- 152: Magnet
- 154: Bodenabschnitt
- 156: Mantelabschnitt
- 158: Innenraum
- 160: Zahnrad
- 162: Zahnring
- 164: Außenverzahnung
- 166: Innenverzahnung
- 168: Schattenniere
- 170: Schattenniere
- 172: Kerbverzahnung / Antriebsverbindung

- h_{D}: radiale Höhe des Durchgangs im Rotor
- h_{S}: radiale Höhe des Saugeingangs
- r_{R}: Innenradius des Ringspalts
- R_{F}: Außenradius des Fortsatzes
- S_{P}: Primärströmung
- S_{S}: Sekundärströmung

## Patentansprüche

1. Elektromotorisch angetriebene Flüssigkeitspumpe (10), mit einem einen Sauganschluss (14) und einen Druckanschluss (16) aufweisenden Gehäuse (12) zur Aufnahme eines Elektromotors (18), der einen Stator (20) und einen innerhalb des Stators (20) unter Belassung eines Ringspalts (24) aufgenommenen, um eine Drehachse (26) drehend antreibbaren Rotor (22) umfasst, einer mit dem Rotor (22) antriebsverbundenen Fördereinrichtung (28), die einen mit dem Sauganschluss (14) fluidverbundenen Saugeingang (30) und einen mit dem Druckanschluss (16) fluidverbundenen Druckausgang (32) aufweist, und einer Leistungselektronik (34) zur Ansteuerung des Elektromotors (18), wobei das Gehäuse (12) eine im Wesentlichen quer zur Drehachse (26) verlaufende, dem Rotor (22) benachbarte Zwischenwand (36) aufweist, auf deren vom Rotor (22) abgewandten Seite die Leistungselektronik (34) montiert ist, wobei der Saugeingang (30) der Fördereinrichtung (28) bezüglich der Drehachse (26) auf einer radialen Höhe (hs) angeordnet ist, die kleiner als ein Innenradius (r_{R}) des Ringspalts (24) ist, und **dadurch gekennzeichnet, dass** der Rotor (22) wenigstens einen Durchgang (40) besitzt, der auf einer bezüglich der Drehachse (26) im Wesentlichen konstanten oder zum Saugeingang (30) der Fördereinrichtung (28) hin zunehmenden radialen Höhe (h_{D}) verläuft, so dass eine über den Sauganschluss (14) des Gehäuses (12) von dem Saugeingang (30) der Fördereinrichtung (28) angesaugte Flüssigkeit teilweise über den Ringspalt (24) zwischen Rotor (22) und Stator (20) zwangsgeführt ist und an der Zwischenwand (36) des Gehäuses (12) unter Kühlung derselben eine Umlenkung erfährt bevor sie durch den Durchgang (40) des Rotors (22) zum Saugeingang (30) der Fördereinrichtung (28) gelangt.

2. Flüssigkeitspumpe (10) nach Anspruch 1, **dadurch gekennzeichnet, dass** der Stator (20) des Elektromotors (18) eine Mehrzahl von metallischen Statorblechen (124) aufweist, die Statorwicklungen (126) tragen und radial innere Enden (132) besitzen, welche an dem Ringspalt (24) angrenzen, wobei die Statorbleche (124) und die Statorwicklungen (126) mittels einer Kunststoffumspritzung (128, 130) derart miteinander verbunden sind, dass die radial inneren Enden (132) der Statorbleche (124) von der Kunststoffumspritzung (128, 130) frei gelassen sind.

3. Flüssigkeitspumpe (10) nach Anspruch 2, **dadurch gekennzeichnet, dass** die radial inneren Enden (132) der Statorbleche (124) nach radial innen über die Kunststoffumspritzung (128, 130) vorstehen und mit Letzterer Nuten (134), insbesondere Axialnuten begrenzen, die sich im Wesentlichen parallel zur Drehachse (26) erstrecken.

4. Flüssigkeitspumpe (10) nach Anspruch 3, **dadurch gekennzeichnet, dass** die Nuten (134) sich wenigstens über die Länge des Rotors (22) erstrecken.

5. Flüssigkeitspumpe (10) nach einem der vorhergehenden Ansprüche, **dadurch gekennzeichnet, dass** der Rotor (22) des Elektromotors (18) auf der von der Zwischenwand (36) abgewandten Seite des Rotors (22) im Gehäuse (12) fliegend gelagert ist.

6. Flüssigkeitspumpe (10) nach einem der vorhergehenden Ansprüche, **dadurch gekennzeichnet, dass** die Zwischenwand (36) des Gehäuses (12) auf ihrer dem Rotor (22) zugewandten Seite einen bezüglich der Drehachse (26) konzentrisch angeordneten, in Richtung des Rotors (22) vorkragenden Fortsatz (142) zur Strömungsumlenkung aufweist.

7. Flüssigkeitspumpe (10) nach Anspruch 6, **dadurch gekennzeichnet, dass** der Fortsatz (142) eine zentrale Aussparung (150) aufweist, in der ein mit dem Rotor (22) verbundener Magnet (152) aufgenommen ist, der einer Sensierung der Winkellage des Rotors (22) um die Drehachse (26) dient.

8. Flüssigkeitspumpe (10) nach Anspruch 6 oder 7, **dadurch gekennzeichnet, dass** der Rotor (22) mehrere, insbesondere im Wesentlichen parallel zur Drehachse (26) verlaufende Durchgänge (40) aufweist, die bezüglich der Drehachse (26) auf einer radialen Höhe (h_{D}) liegen, welche gleich oder größer als ein Außenradius (R_{F}) des Fortsatzes (142) ist.

9. Flüssigkeitspumpe (10) nach einem der vorhergehenden Ansprüche, **dadurch gekennzeichnet, dass** zur Verbesserung der Kaltlaufeigenschaften eine Bypass-Verbindung (42) vorgesehen ist, die den Sauganschluss (14) des Gehäuses (12) in Strömungsrichtung gesehen vor dem Ringspalt (24) mit dem Saugeingang (30) der Fördereinrichtung (28) verbindet.

10. Flüssigkeitspumpe (10) nach Anspruch 9, **dadurch gekennzeichnet, dass** die Bypass-Verbindung (42) durch einen weiteren Ringspalt (44) zwischen einer Innenumfangsfläche (46) des Rotors (22) und einer Wandfläche (48) des Gehäuses (12) ausgebildet ist.

11. Flüssigkeitspumpe (10) nach einem der vorhergehenden Ansprüche, **dadurch gekennzeichnet, dass** das Gehäuse (12) auf der vom Rotor (22) abgewandten Seite der Zwischenwand (36) durch einen metallischen Deckel (56) verschlossen ist, der sich zur Wärmeabfuhr nach außen nahe der Leistungselektronik (34) über die Leistungselektronik (34) hinweg erstreckt und auf seiner von der Leistungselektronik (34) abgewandten Seite ggf. mit einer oberflächenvergrößernden Struktur (110) versehen ist.

12. Flüssigkeitspumpe (10) nach einem der vorhergehenden Ansprüche, **dadurch gekennzeichnet, dass** der Rotor (22) im Wesentlichen becherförmig ausgebildet ist und einen Innenraum (158) begrenzt, in dem die Fördereinrichtung (28) wenigstens teilweise aufgenommen ist.

13. Flüssigkeitspumpe (10) nach einem der vorhergehenden Ansprüche, **dadurch gekennzeichnet, dass** das Gehäuse (12) vornehmlich aus Kunststoff besteht und der Rotor (22) des Elektromotors (18) über eine Motorwelle (136) unmittelbar im Kunststoff des Gehäuses (12) gelagert ist.

14. Flüssigkeitspumpe (10) nach Anspruch 13, **dadurch gekennzeichnet, dass** der Rotor (22) des Elektromotors (18) mit der Fördereinrichtung (28) vermittels der Motorwelle (136) antriebsverbunden ist, die zu beiden Seiten der Fördereinrichtung (28) über je eine Lagerstelle (138, 140) im Gehäuse (12) gelagert ist, wobei die vom Rotor (22) fernere Lagerstelle (140) für die Motorwelle (136) über deren Antriebsverbindung (172) zur Fördereinrichtung (28) geschmiert ist.

15. Flüssigkeitspumpe (10) nach einem der vorhergehenden Ansprüche, **dadurch gekennzeichnet, dass** die Fördereinrichtung (28) in der Art einer Innenzahnradpumpe ausgebildet ist, mit einem vom Rotor (22) des Elektromotors (18) drehangetriebenen, bezüglich der Drehachse (26) konzentrisch angeordneten Zahnrad (160) mit Außenverzahnung (164) und einem mit der Außenverzahnung (164) kämmenden, bezüglich der Drehachse (26) exzentrisch im Gehäuse (12) geführten Zahnring (162) mit Innenverzahnung (166), die mit der Außenverzahnung (164) zusammenwirkt, um die Flüssigkeit zu fördern.

## Claims

1. Electric-motor-driven liquid pump (10), comprising a housing (12), which has a suction connection (14) and a pressure connection (16), for reception of an electric motor (18), which comprises a stator (20) and a rotor (22) which is received within the stator (20) to leave an annular gap (24) and is drivable for rotation about an axis of rotation (26), a conveying device (28), which is in drive connection with the rotor (22) and which has a suction inlet (30) in fluid connection with the suction connection (14) and a pressure outlet (32) in fluid connection with the pressure connection (16), and an electronic power unit (34) for drive of the electric motor (18), wherein the housing (12) comprises a partition wall (36) which extends substantially transversely to the axis of rotation (26) and is adjacent to the rotor (22) and on the side of which remote from the rotor (22) the electronic power unit (34) is mounted, wherein the suction inlet (30) of the conveying device (28) is arranged at a radial height (h_{S}) with respect to the axis of rotation (26) which is smaller than an inner radius (r_{R}) of the annular gap (24), and **characterized in that** the rotor (22) has at least one passage (40) which extends at a radial height (h_{D}) substantially constant or increasing in direction towards the suction inlet (30) of the conveying device (28) with respect to the axis of rotation (26) so that a liquid inducted by the suction inlet (30) of the conveying device (28) via the suction connection (14) of the housing (12) is constrainedly guided in part by way of the annular gap (24) between rotor (22) and stator (20) and undergoes deflection at the partition wall (36) of the housing (12) with cooling thereof before it passes through the passage (40) of the rotor (22) to the suction inlet (30) of the conveying device (28).

2. Liquid pump (10) according to claim 1, **characterized in that** the stator (20) of the electric motor (18) comprises a plurality of metallic stator laminations (124) which carry stator windings (126) and have radially inner ends (132) adjoining the annular gap (24), wherein the stator laminations (124) and the stator windings (126) are so connected together by a plastics material injection-molded enclosure (128, 130) that the radially inner ends (132) of the stator laminations (124) are left free by the plastics material injection-molded enclosure (128, 130).

3. Liquid pump (10) according to claim 2, **characterized in that** the radially inner ends (132) of the stator laminations (124) protrude radially inwardly beyond the plastics material injection-molded enclosure (128, 130) and together with the latter bound grooves (134), particularly axial grooves, extending substantially parallel to the axis of rotation (26).

4. Liquid pump (10) according to claim 3, **characterized in that** the grooves (134) extend at least over the length of the rotor (22).

5. Liquid pump (10) according to any one of the preceding claims, **characterized in that** the rotor (22) of the electric motor (18) is cantilever-mounted in the housing (12) on the side of the rotor (22) remote from the partition wall (36).

6. Liquid pump (10) according to any one of the preceding claims, **characterized in that** the partition wall (36) of the housing (12) has on its side facing the rotor (22) a projection (142), which is arranged concentrically with respect to the axis of rotation (26) and which protrudes in the direction of the rotor (22), for the flow deflection.

7. Liquid pump (10) according to claim 6, **characterized in that** the projection (142) has a central recess (15) in which a magnet (152) connected with the rotor (22) and serving for sensing the angular position of the rotor (22) about the axis of rotation (26) is received.

8. Liquid pump (10) according to claim 6 or 7, **characterized in that** the rotor (22) has a plurality of passages (40) which extend, in particular, substantially parallel to the axis of rotation (26) and which with respect to the axis of rotation (26) lie at a radial height (h_{D}) equal to or greater than an outer radius (R_{F}) of the projection (142).

9. Liquid pump (10) according to any one of the preceding claims, **characterized in that** a bypass connection (42) is provided which, for improving the cold-running characteristics, connects the suction connection (14) of the housing (12) with the suction inlet (30) of the conveying device (28) in front of the annular gap (24) as seen in flow direction.

10. Liquid pump (10) according to claim 9, **characterized in that** the bypass connection (42) is formed by a further annular gap (44) between an inner circumferential surface (46) of the rotor (22) and a wall surface (48) of the housing (12).

11. Liquid pump (10) according to any one of the preceding claims, **characterized in that** the housing (12) is closed on the side of the partition wall (36) remote from the rotor (22) by a metallic cover (56) which for outward heat dissipation extends near the electronic power unit (34) and over the electronic power unit (34) and is optionally provided on its side remote from the electronic power unit (34) with a surface-increasing structure (110).

12. Liquid pump (10) according to any one of the preceding claims, **characterized in that** the rotor (22) is of substantially cup-shaped construction and bounds an interior space (158) in which the conveying device (28) is received at least in part.

13. Liquid pump (10) according to any one of the preceding claims, **characterized in that** the housing (12) consists predominantly of plastics material and the rotor (22) of the electric motor (18) is mounted by way of a motor shaft (136) directly in the plastics material of the housing (12).

14. Liquid pump (10) according to claim 13, **characterized in that** the rotor (22) of the electric motor (18) is in drive connection with the conveying device (28) via the motor shaft (136), which is mounted on either side of the conveying device (28) in the housing (12) by way of a respective bearing (138, 140), wherein the bearing (140), which is further from the rotor (22), for the motor shaft (136) is lubricated by way of the drive connection (172) thereof to the conveying device (28).

15. Liquid pump (10) according to any one of the preceding claims, **characterized in that** the conveying device (28) is constructed in the form of an internal gear pump, with a gearwheel (160), which is rotationally driven by the rotor (22) of the electric motor (18), arranged concentrically with respect to the axis of rotation (26), and comprises external toothing (164), and an annular gear (162), which meshes with the external toothing (164), is guided in the housing (12) eccentrically with respect to the axis of rotation (26), and comprises internal toothing (166) co-operating with the external toothing (164) so as to convey the liquid.

## Revendications

1. Pompe à liquide (10) à entraînement électromoteur, pourvue d'un carter (12) présentant un raccord d'aspiration (14) et un raccord de pression (16) et destiné à loger un moteur électrique (18), qui comprend un stator (20) et un rotor (22) logé à l'intérieur du stator (20) en laissant une fente annulaire (24) et pouvant être entraîné en rotation autour d'un axe de rotation (26), d'un dispositif de refoulement (28) qui est en liaison d'entraînement avec le rotor (22) et qui présente une entrée d'aspiration (30) en liaison fluidique avec le raccord d'aspiration (14) et une sortie de pression (32) en liaison fluidique avec le raccord de pression (16), et d'une électronique de puissance (34) destinée à commander le moteur électrique (18), dans laquelle le carter (12) présente une paroi intermédiaire (36) s'étendant sensiblement transversalement à l'axe de rotation (26) et voisine du rotor (22), sur la face de laquelle, ladite face étant opposée au rotor (22), est montée l'électronique de puissance (34),
dans laquelle l'entrée d'aspiration (30) du dispositif de refoulement (28) est agencée par rapport à l'axe de rotation (26) à une hauteur radiale (hₛ) qui est inférieure à un rayon intérieur (r_{R}) de la fente annulaire (24), et **caractérisée en ce que**
le rotor (22) possède au moins un passage (40), qui s'étend à une hauteur radiale (h_{D}) sensiblement constante ou augmentant en direction de l'entrée d'aspiration (30) du dispositif de refoulement (28) par rapport à l'axe de rotation (26), de sorte qu'un liquide aspiré par l'entrée d'aspiration (30) du dispositif de refoulement (28) par l'intermédiaire du raccord d'aspiration (14) du carter (12) est en partie guidé de force en passant par la fente annulaire (24) entre le rotor (22) et le stator (20) et, sur la paroi intermédiaire (36) du carter (12), sous l'effet du refroidissement de celle-ci, subit une déviation avant de parvenir à l'entrée d'aspiration (30) du dispositif de refoulement (28) en traversant le passage (40) du rotor (22).

2. Pompe à liquide (10) selon la revendication 1, **caractérisée en ce que** le stator (20) du moteur électrique (18) présente une pluralité de tôles de stator (124) métalliques, qui portent des enroulements statoriques (126) et possèdent des extrémités (132) radialement intérieures, lesquelles sont adjacentes à la fente annulaire (24), dans laquelle les tôles de stator (124) et les enroulements statoriques (126) sont reliés les uns aux autres au moyen d'un surmoulage plastique (128, 130), de telle sorte que les extrémités (132) radialement intérieures des tôles de stator (124) sont laissées dégagées du surmoulage plastique (128, 130).

3. Pompe à liquide (10) selon la revendication 2, **caractérisée en ce que** les extrémités (132) radialement intérieures des tôles de stator (124) font saillie radialement vers l'intérieur du surmoulage plastique (128, 130) et délimitent avec ce dernier des rainures (134), en particulier des rainures axiales, qui s'étendent sensiblement parallèlement à l'axe de rotation (26).

4. Pompe à liquide (10) selon la revendication 3, **caractérisée en ce que** les rainures (134) s'étendent au moins sur toute la longueur du rotor (22).

5. Pompe à liquide (10) selon l'une quelconque des revendications précédentes, **caractérisée en ce que** le rotor (22) du moteur électrique (18) est monté en porte-à-faux dans le carter (12) sur la face du rotor (22) opposée à la paroi intermédiaire (36).

6. Pompe à liquide (10) selon l'une quelconque des revendications précédentes, **caractérisée en ce que** la paroi intermédiaire (36) du carter (12) présente sur sa face tournée vers le rotor (22) une partie saillante (142) agencée de manière concentrique par rapport à l'axe de rotation (26) et faisant saillie en direction du rotor (22) et destinée à dévier l'écoulement.

7. Pompe à liquide (10) selon la revendication 6, **caractérisée en ce que** la partie saillante (142) présente un évidement (150) central dans lequel est logé un aimant (152) relié au rotor (22), lequel aimant sert à détecter la position angulaire du rotor (22) autour de l'axe de rotation (26).

8. Pompe à liquide (10) selon la revendication 6 ou 7, **caractérisée en ce que** le rotor (22) présente plusieurs passages (40) s'étendant en particulier sensiblement parallèlement à l'axe de rotation (26), qui se situent à une hauteur radiale (h_{D}) par rapport à l'axe de rotation (26), laquelle est supérieure ou égale à un rayon extérieur (R_{F}) de la partie saillante (142).

9. Pompe à liquide (10) selon l'une quelconque des revendications précédentes, **caractérisée en ce que**, pour améliorer les propriétés de fonctionnement à froid, une liaison de dérivation (42) est prévue, qui relie le raccord d'aspiration (14) du carter (12) à l'entrée d'aspiration (30) du dispositif de refoulement (28) devant la fente annulaire (24) vu dans le sens d'écoulement.

10. Pompe à liquide (10) selon la revendication 9, **caractérisée en ce que** la liaison de dérivation (42) est formée par une autre fente annulaire (44) entre une surface périphérique intérieure (46) du rotor (22) et une surface de paroi (48) du carter (12).

11. Pompe à liquide (10) selon l'une quelconque des revendications précédentes, **caractérisée en ce que** le carter (12), sur la face de la paroi intermédiaire (36), laquelle face est opposée au rotor (22), est fermé par un couvercle métallique (56), qui, pour l'évacuation de chaleur, s'étend vers l'extérieur à proximité de l'électronique de puissance (34) au-delà de l'électronique de puissance (34) et qui est le cas échéant pourvu sur sa face opposée à l'électronique de puissance (34) d'une structure (110) augmentant la surface.

12. Pompe à liquide (10) selon l'une quelconque des revendications précédentes, **caractérisée en ce que** le rotor (22) est sensiblement en forme de godet et délimite un espace intérieur (158) dans lequel le dispositif de refoulement (28) est logé au moins en partie.

13. Pompe à liquide (10) selon l'une quelconque des revendications précédentes, **caractérisée en ce que** le carter (12) est constitué principalement de plastique et le rotor (22) du moteur électrique (18) est monté directement dans le plastique du carter (12) par l'intermédiaire d'un arbre de moteur (136).

14. Pompe à liquide (10) selon la revendication 13, **caractérisée en ce que** le rotor (22) du moteur électrique (18) est en liaison d'entraînement avec le dispositif de refoulement (28) au moyen de l'arbre de moteur (136), qui est monté dans le carter (12) de part et d'autre du dispositif de refoulement (28) par l'intermédiaire d'un point d'appui (138, 140) respectif, dans laquelle le point d'appui (140) pour l'arbre de moteur (136), lequel point est très éloigné du rotor (22), est lubrifié sur toute l'étendue de sa liaison d'entraînement (172) au dispositif de refoulement (28).

15. Pompe à liquide (10) selon l'une quelconque des revendications précédentes, **caractérisée en ce que** le dispositif de refoulement (28) est réalisé à la façon d'une pompe à engrenages intérieurs, pourvue d'un engrenage (160) à denture extérieure (164) entraîné en rotation par le rotor (22) du moteur électrique (18) et agencé de manière concentrique par rapport à l'axe de rotation (26) et d'une couronne dentée (162) à denture intérieure (166), laquelle denture coopère avec la denture extérieure (164) pour refouler le liquide, laquelle couronne s'engrène avec la denture extérieure (164) et est guidée de manière excentrée dans le carter (12) par rapport à l'axe de rotation (26).
